Europäisches Patentamt

European Patent Office

Office européen des brevets

(19)

(11) Veröffentlichungsnummer: **0 073 879**
**B1**

(12) # EUROPÄISCHE PATENTSCHRIFT

(45) Veröffentlichungstag der Patentschrift:
02.08.89

(21) Anmeldenummer: **82104149.8**

(22) Anmeldetag: **12.05.82**

(51) Int. Cl.⁴: **G 01 B 11/10**

(54) **Vorrichtung zur Titerkontrolle an Spinnkabeln aus Chemiefasern.**

(30) Priorität: **26.08.81 CH 5489/81**

(43) Veröffentlichungstag der Anmeldung:
**16.03.83 Patentblatt 83/11**

(45) Bekanntmachung des Hinweises auf die Patenterteilung:
**02.08.89 Patentblatt 89/31**

(84) Benannte Vertragsstaaten:
**DE FR GB IT**

(56) Entgegenhaltungen:
**CH-A-437 854**
**DE-B-1 278 143**
**GB-A-2 007 836**
**GB-A-2 064 106**
**US-A-3 901 606**

(73) Patentinhaber: **ZELLWEGER USTER AG, Wilstrasse 11, CH- 8610 Uster (CH)**

(72) Erfinder: **Aeppli, Kurt, Grundstrasse 4, CH- 8610 Uster (CH)**

(74) Vertreter: **Dipl.- Phys.Dr. Manitz Dipl.- Ing., Dipl.- Wirtsch. Finsterwald Dipl.- Ing. Grämkow Dipl.- Chem.Dr. Heyn Dipl.- Phys. Rotermund, Morgan, B.Sc.(Phys.) Robert- Koch- Strasse 1, D-8000 München 22 (DE)**

EP 0 073 879 B1

## Beschreibung

Die Erfindung betrifft eine bekannte Vorrichtung zur Titerkontrolle an Spinnfäden aus Chemiefasern nach dem ersten Teil des Anspruchs 1.

Spinnfäden oder auch Spinnkabel aus Chemiefasern weisen in der Regel einen bandförmigen und nicht kreisförmigen Querschnitt auf, was bei der Titerbestimmung je nach ihrer Orientierung im Lichtstrahl zu unterschiedlichen Messwerten führt. Aus diesem Grund konnten bisher für Spinnfäden aus Naturfasern bekannte Messverfahren, wie sie beispielsweise in der GB-A-2 064 106 und in der US-A-3 901 606 beschrieben sind, nicht ohne zusätzlichen Aufwand für die Titerkontrolle von Spinnfäden aus Chemiefasern, d.h. für Multifilamentgarne, verwendet werden.

Ein Beispiel für diesen zusätzlichen Aufwand ist der CH-A-437 854 zu entnehmen, gemäß welcher die Messeinrichtung mindestens zwei winklig zueinander angeordnete lichtempfindliche Zellen aufweist, die derart angeordnet sind, daß der zu messende Faden in der Kreuzungsstelle der die Zellen beaufschlagenden Lichtstrahlen liegt. Es liegt auf der Hand, daß dieser Aufbau der Messeinrichtung einen nicht unerheblichen Mehraufwand bedeutet.

Durch die Erfindung soll nun eine Vorrichtung der eingangs genannten Art angegeben werden, welche eine exakte Titerkontrolle an Multifilamentgarnen mit möglichst geringem Aufwand ermöglicht.

Diese Aufgabe wird nach dem zweiten Teil des Anspruchs 1 gelöst.

Die Erfindung geht somit von der Erkenntnis aus, daß eine Titermessung von Multifilamenten am besten durch die Kombination einer elektrooptischen Durchmessermessung mit Mitteln zur Ausschaltung des genannten Formeffekts gewährleistet ist, wobei diese Mittel am einfachsten durch eine Einrichtung zur Formung eines definierten Querschnitts des Spinnfadens im Messbereich gebildet sind. Anhand der Beschreibung und der Figuren wird eine erfindungsgemäße Vorrichtung näher erläutert. Dabei zeigt

Fig. 1 eine prinzipielle Anordnung in Fadenlaufrichtung,

Fig. 2 dieselbe Anordnung im Fadenlaufrichtung,

Fig. 3 das Prinzip einer Kerbe für die Orientierung des Spinnkabels,

Fig. 4 und 5 in Draufsicht und im Schnitt eine mögliche Gestaltung einer Kerbe.

Eine Lichtquelle 1 beleuchtet über einen Kondensor 2 den im Strahlengang 2' geführten Spinnfaden 3. Mittels einer Optik 4 wird das Strahlenbündel auf eine Photodiodenzeile 5 an sich bekannter Art projiziert. Auf dieser werden somit nur diejenigen Photodiodenelemente belichtet, die nicht im Schatten des Spinnfadens 3 liegen. Je nach dem Querschnitt des Spinnfadens 3 ist die Zahl der im Schatten liegenden Photodiodenelemente größer oder kleiner, und in einem Auswertegerät 7 wird diese Anzahl der nicht belichteten Photodiodenelemente ausgewertet. Dabei zeigt sich der wesentliche Vorteil von Photodiodenzeilen, daß deren Ausgangssignale nicht von der Lage des Spinnfadens im Strahlenbündel abhängt. Der Formeffekt der Schattenbildung durch die an sich undefinierte Orientierung des Spinnfadens im Strahlengang kann in an sich bekannter Weise durch Erteilung eines falschen Dralles im Messbereich ausgeschaltet werden. Der Spinnfaden wird dabei mindestens innerhalb der Meßstrecke mittels eines Drallgebers 6 schraubenförmig verdrillt, so dass im Mittel immer der runde Spinnfaden Querschnitt zur Wirkung kommt.

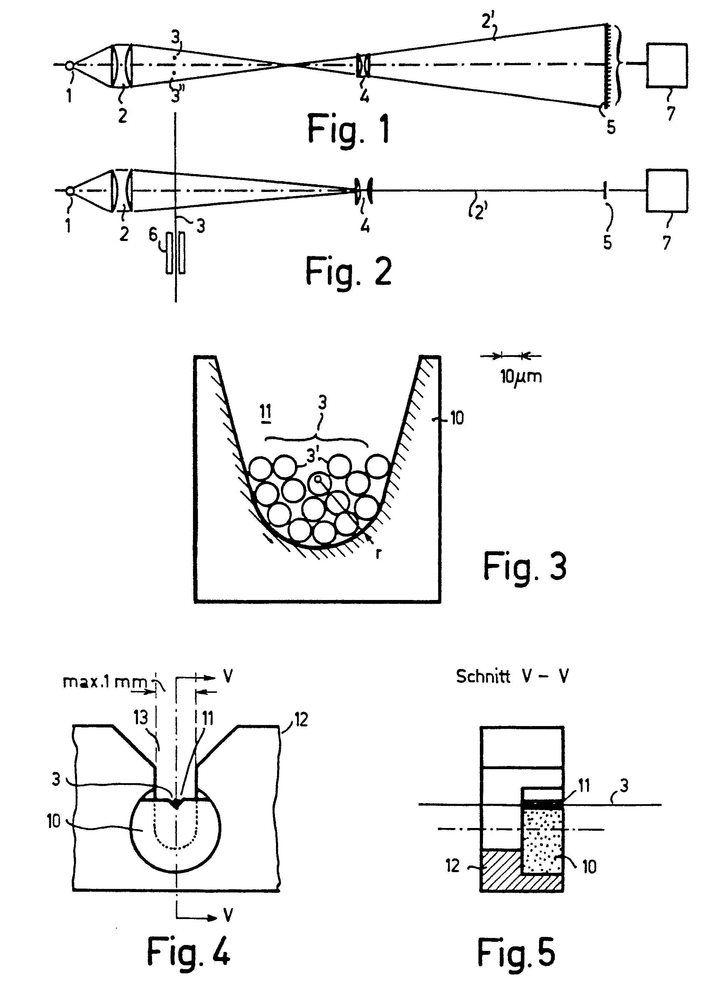

Falls die Anwendung eines Dralls aus textiltechnischen Gründen nicht erwünscht ist, kann an der Stelle eines Drallgebers 6 auch ein geeignet geformtes Führungselement in Form einer Kerbe eingesetzt werden. In dieser Kerbe liegt der Spinnfaden so, dass mindestens im Bereich des Strahlengangs eine definierte Ordnung der Fibrillen 3' erreicht wird. Figur 3 zeigt - stark vergrössert - dieses Prinzip. In einer Scheibe 10, die Vorzugsweise aus sehr widerstandsfähigem Material besteht, ist die V-förmige Kerbe 11 mit einem Radius r im Kerbengrund von wenigen μm eingearbeitet. Der Radius r ist so bemessen, dass er sich für die in der Praxis üblichen Filament-Durchmesser um 20 μm und Filamentzahlen von 7 bis etwa 50 eignet. Durch die V-förmige Ausbildung wird ein Klemmen der Fibrillen 3' bei jeder Fibrillenzahl vermieden.

Figuren 4 und 5 zeigen eine praktische Ausführung einer Führungskerbe in Frontansicht und im Längsschnitt. In einem Baukörper 12 ist ein Führungsschlitz 13 vorgesehen. Konzentrisch zur Rundung im Grund des Führungsschlitzes 13 ist eine Scheibe 10 eingesetzt, in die die eigentlichen Kerbe 11 zur Aufnahme des Spinnfadens 3 eingelassen ist. Als Werkstoff für die Scheibe 10 kann beispielsweise Saphir verwendet werden, der gegenüber der Abnützung durch den durchlaufenden Spinnfaden 3 hinreichend widerstandsfähig ist.

Mittels der Strahlenoptik kann der auf die Photodiodenzeile 5 geworfene Schatten des Spinnfadens auch grösser oder kleiner eingestellt werden, als dies dem tatsächlichen Querschnitt des Spinnfadens entspricht: ist das Spinnkabel sehr fein, vermag eine Vergrösserung des Schattens eine bessere Auflösung des Querschnittes zu erreichen; ist das Spinnkabel dagegen sehr dick, kann mit einer Verkleinerung des Schattens auf der Photodiodenzeile 5 die letztere in handelsüblicher Grösse verwendet werden, ohne dass eine Spezialausführung eingesetzt werden müsste.

Die erfindungsgemässe Vorrichtung weist eine Reihe von Vorteilen auf, die mit bisherigen Messverfahren nicht erreicht werden konnten:

- keine Drift, da nur die relative Zahl der Photodiodenelemente im Schatten des Spinnfadens zum Ergebnis beiträgt;
- keine Temperatur- und Feuchtigkeitseinflüsse;
- kein Einfluss durch auf den Fibrillen des Spinnfadens aufgebrachter Präparation;
- Formeinfluss durch geeignete Hilfsmittel völlig ausschaltbar;
- mit einem Messvorgang können mehrere benachbarte Fäden 3, 3" gemessen werden, da deren seitlicher Abstand sehr klein gehalten werden kann.
- Einsetzbarkeit der Vorrichtung mit einer einzigen handelsüblichen Grösse von Photodiodenzeilen für feine und grobe Spinnfäden durch Anpassung der Strahlenoptik mittels der eine Vergrösserung oder Verkleinerung des projizierten Schattenbildes auf der Photodiodenzeile erreicht wird.

**Patentansprüche**

1. Vorrichtung zur Titerkontrolle an Spinnfäden aus Chemiefasern, mit einem Meßorgan mit einer Lichtquelle, einer Optik und einem lichtelektrischen Empfänger mit mindestens einer Photodiodenzeile, wobei eine Projektion des Schattens des zwischen Lichtquelle und Empfänger in einer eindeutigen Orientierung geführten Spinnfadens auf die Photodiodenzeile und dadurch eine Abschattung einer dem Querschnitt des Spinnfadens entsprechenden Anzahl von Photodiodenelementen erfolgt, dadurch gekennzeichnet, daß ein einseitig offenes Führungselement (10) zur Bildung einer definierten Ordnung der den Spinnfaden (3) bildenden Fibrillen (3') im Bereich des Strahlengangs der Optik (2, 4) vorgesehen ist.

2. Vorrichtung nach Anspruch 1, dadurch gekennzeichnet, daß das Führungselement (10) eine mit einem Radius (r) im Kerbengrund versehene Führungskerbe (11) aufweist.

3. Vorrichtung nach Anspruch 2, dadurch gekennzeichnet, daß die Führungskerbe (11) in eine Auflagefläche des Führungselements (10) eingearbeitet und von einem Führungsschlitz (13) von wesentlich größeren Abmessungen als die Führungskerbe (11) umgeben ist.

4. Vorrichtung nach Anspruch 3, dadurch gekennzeichnet, daß das Führungselement (10) aus Saphir gefertigt ist.

**Claims**

1. Apparatus for the titer control of spun threads of chemical fibres comprising a measurement device with a light source, an optical system and a light electrical receiver having at least one photodiode row, wherein a projection takes place onto the photodiode row of the shadow of the spun thread which is guided in an unambiguous orientation between the light source and the receiver, thereby obscuring a number of photodiode elements corresponding to the cross-section of the spun thread, characterized in that a guide element (10) open at one side is provided for forming a defined arrangement of the fibrils (3') forming the spun thread (3) in the region of the beam path of the optical system (2, 4).

2. Apparatus in accordance with claim 1, characterized in that the guide element (10) has a guide notch (11) provided with a radius (r) at the base of the notch.

3. Apparatus in accordance with claim 2, characterized in that the guide notch (11) is worked into a support surface of the guide element (10) and is surrounded by a guide slot (13) of substantially larger dimensions than the guide notch (11).

4. Apparatus in accordance with claim 3, characterized in that the guide element (10) is manufactured of sapphire.

**Revendications**

1. Dispositif pour le contrôle d'un fil de fibres chimiques comportant un organe de mesure avec une source lumineuse, une optique et un récepteur photo-électrique avec au moins une ligne de photodiodes, avec lequel est effectuée une projection de l'ombre sur la ligne de photodiodes du fil de filaments guidé suivant une orientation définie entre source lumineuse et récepteur, ce qui a pour suite de plonger dans l'ombre un nombre de photodiodes élémentaires correspondant à la section droite du fil de filaments, caractérisé en ce qu'il est prévu un élément de guidage (10) ouvert d'un côté pour ordonner de façon définie les fibrilles (3') formant le fil (3) dans la zone du trajet des rayons lumineux de l'optique (2, 4).

2. Dispositif selon la revendication 1, caractérisé en ce que l'élément de guidage (10) comporte une encoche de guidage (11) possédant un rayon (r) au fond de l'encoche.

3. Dispositif selon la revendication 2, caractérisé en ce que l'encoche de guidage (11) est ménagée dans une surface d'appui de l'élément de guidage (10) et est entourée par une fente de guidage (13) dont les dimensions sont sensiblement supérieures à celles de l'encoche de guidage (11).

4. Dispositif selon la revendication 3, caractérisé en ce que l'élément de guidage (10) est en saphir.

Fig. 1

Fig. 2

Fig. 3

10µm

Fig. 4

max.1 mm

Schnitt V – V

Fig.5